# EUROPÄISCHE PATENTSCHRIFT

(11) **EP 0 958 730 B1**
(45) Veröffentlichungstag und Bekanntmachung des Hinweises auf die Patenterteilung: **10.04.2002**
(21) Anmeldenummer: 99108110.0
(22) Anmeldetag: 24.04.1999
(51) Int. Cl.: A01D 41/14, A01D 75/28, A01B 63/114

(54) **Einrichtung zur Steuerung und Einstellung von Arbeitszylindern**
Device for actioning and adjusting working cylinders
Dispositif pour actionner et réguler des cylindres de travail

(30) Priorität: 13.05.1998 DE 19823347
(43) Veröffentlichungstag der Anmeldung: 24.11.1999
(73) Patentinhaber: CLAAS KGaA, 33428 Harsewinkel (DE)
(72) Erfinder: Eis, Günter, 33428 Harsewinkel (DE)

(56) Entgegenhaltungen:
- EP-A- 0 286 736
- DE-A- 4 126 515
- DE-A- 19 612 717
- FR-A- 2 080 242
- FR-A- 2 534 771

## Beschreibung

Die Erfindung betrifft eine Einrichtung zur Einstellung und Steuerung hydraulischer Arbeitszylinder an Vorsatzgeräten und Baugruppen von Arbeitsmaschinen, vorzugsweise selbstfahrenden Erntemaschinen.

Die Verwendung hydraulischer oder pneumatischer Arbeitszylinder an Maschinen und Einrichtungen zur Erzeugung einer geradlinigen Bewegung ist bereits allgemein bekannt, wobei mit Hilfe dieser Stellmotore sehr hohe Geschwindigkeitsuntersetzungen und große Hub- resp. Stellkräfte erreicht werden können.

So ist beispielsweise aus DE 36 284 77 C2 eine Arbeitsmaschine mit einem höhenverstellbaren Arbeitsvorsatz bekannt, der unter Verwendung eines hydraulischen Arbeitszylinders an die Arbeitsmaschine abnehmbar angekoppelt ist. Über den hydraulischen Arbeitszylinder wird die Masse des Arbeitsvorsatzes auf die Arbeitsmaschine übertragen und gleichzeitig das Arbeitsgerät in die gewünschte Arbeitsstellung verbracht. Ziel dieser Lösung ist es, in Abhängigkeit von den Einsatzbedingungen und den voreinstellbaren Werten für den Auflage- oder Entlastungsdruck die Schürf- und Auflagekräfte des Arbeitsvorsatzes zu verringern. Schaltungsseitig sind die Arbeitszylinder über ein 3/2 Wegeventil mit einer Hydraulikpumpe verbunden, wobei sich in der Druckleitung zwischen dem Wegeventil und dem hydraulischen Arbeitszylinder ein Drucksensor befindet, der über eine Steuerleitung an eine Drucksteuerschaltung mit einem Sollwertgeber angeschaltet ist. Durch eine weitere Steuerleitung ist die Drucksteuerschaltung mit einem Regelventil verbunden, das in einer Bypassleitung, die die Druckleitung mit der Rücklaufleitung verbindet, angeordnet ist.

Mit Hilfe dieser Schaltungsanordnung kann der im hydraulischen Arbeitszylinder herrschende Druck-Istwert zur Verringerung der Auflagekräfte des Arbeitsvorsatzes oder der Entlastungsdruck bei Abweichungen von einem in der Steuereinrichtung eingestellten Druck-Sollwert geregelt werden.

Eine vorteilhafte Weiterbildung dieser Steuerung ist Gegenstand des EP 0 610 900 A1. Zur Verbesserung der vorbekannten Entlastungsvorrichtung ist an den Druckraum der Kolbenfläche des hydraulischen Arbeitszylinders ein aufladbarer Druckspeicher mit einem vorgeschalteten Umschaltventil angeschlossen und zwischen der Druck- und der Rücklaufleitung für die Arbeitsflüssigkeit ein weiteres Umschaltventil vorgesehen.

Über diese Umschaltventilanordnung kann nach Erreichen des für den Entlastungsbetrieb notwendigen Druckes im Druckraum des hydraulischen Arbeitszylinders und im aufladbaren Druckspeicher, der kraftfahrzeugseitige Hydraulikkreislauf vom Entlastungskreislauf getrennt werden, wobei der Druckspeicher mit dem Druckraum des Arbeitszylinders zur Aufrechterhaltung des Entlastungsbetriebes verbunden bleibt.

Bei Änderungen des Entlastungsdruckes, die eine Unterschreitung oder Überlastung zum eingestellten Sollwert darstellen, wird durch die Umschaltventilanordnung automatisch die Leitungsverbindung des Druckraumes des hydraulischen Arbeitszylinders und des Druckspeichers mit der Druck- bzw. der Rücklaufleitung hergestellt.

Eine hydraulische Schwebeanordnung für ein landwirtschaftliches Gerät ist aus DE 33 37 789 A1 bekannt. Nach dieser Lösung sind die Druckräume der hydraulischen Arbeitszylinder über ein Wegeventil an eine Hydraulikpumpe angeschlossen und in den Leitungszweig der Hochdruckleitung zwischen dem Wegeventil und den Druckräumen der Arbeitszylinder ein Druckspeicher mit einem vorgeschalteten weiteren Zylinder, der einen schwimmenden Kolben aufweist, eingebunden.

Mit dieser hydraulischen Schwebeanordnung werden Ernte- oder Arbeitsvorsätze an selbstfahrenden Maschinen unter einer in Abhängigkeit von ihrer Masse einstellbaren nachgebenden Vorspannkraft so gehalten, daß sie über den Erdboden gleiten können und bei Auftreffen auf ein Hindernis, unterstützt durch die im Druckspeicher vorhandenen Druckkräfte, angehoben werden.

Zur federelastischen, schwingungsgedämpften Aufhängung von Fahrzeugachsen sind aus dem Fahrzeugbau ferner Lösungen bekannt, bei denen die lasttragenden Fahrzeugachsen in einer direkt am Fahrzeugrahmen angebrachten, verschwenkbar gelagerten Dreieckschwinge - DE 14 80 154; DE 24 07 970; DE 28 11 873 - oder in einer Schwinge angeordnet sind, die an einen endseitig am Fahrzeugrahmen gelagerten Längsträger angelenkt ist - DE 10 92 778.

Die direkt am Fahrzeugrahmen angebrachten Dreieckschwingen oder der am Fahrzeugrahmen angebrachte Längsträger sind mit einem hydraulischen oder pneumatischen Arbeitszylinder verbunden. Durch die drehbewegliche Anordnung von Dreieckschwinge und Längsträger und ihr Zusammenwirken mit einer pneumatischen Gasfeder oder einem pneumatisch-hydraulischen Arbeitszylinder werden die im Fahrbetrieb auftretenden Schwingungen und Stöße, die vom Fahrwerk auf das gesamte Fahrzeug übertragen werden, weitgehend kompensiert oder gedämpft und bei verbesserter Bodenhaftung der Fahrzeugräder eine gute Anpassung des Fahrwerkes an den Fahrweg erreicht.

Die Anwendung oder fachgemäße Übertragung dieser prinzipiellen Lösungen auf Fahrwerke und/oder Arbeitsvorsätze an landwirtschaftlichen Erntemaschinen ist schon aufgrund des hierfür erforderlichen Bauraumes nicht möglich.

In Abhängigkeit vom Erntegut werden selbstfahrende Erntemaschinen mit unterschiedlichen Erntevorsätzen ausgestattet. Zwischen diesen Erntevorsätzen bestehen zwangsläufig sehr große Massenunterschiede. Zum Anheben und Absenken der unterschiedlichen Erntevorsätze und zur Erzeugung einer einstellbaren, nachgebenden Vorspannkraft in den Hub- und Stellzylindern für die Aufrechterhaltung einer Schwebeanordnung der Arbeitsgeräte während des Erntevorganges muß von hydraulischer Seite eine relativ große Ausrüstung vorgesehen werden.

Besonders extrem sind die Massenunterschiede bei den Erntevorsätzen für selbstfahrende Feldhäcksler. Für die Erntevorsätze, die beispielsweise zur Grasernte mit einer Pickup eingesetzt werden, sind Arbeitsdrücke von etwa 40 bar erforderlich, während in der Maisernte mit einem Maiserntevorsatz Drücke von bis zu 130 bar aufgebracht werden müssen. Um diesen stark voneinander abweichenden Bedingungen Rechnung zu tragen, werden für den Anschluß von Erntevorsätzen mit einer relativ hohen Masse an selbstfahrenden Erntemaschinen neben den bereits vorhandenen hydraulischen Hub- und Stellzylindern weitere Zylinder zusätzlich angebracht, die bei Arbeiten mit Erntevorsätzen, die eine relativ kleine Masse aufweisen, wieder abgebaut werden.

Zu den unterschiedlichen Belastungszuständen einer Erntemaschine gehören auch der Grad der Beladung, der Feldzustand und die Arbeitsweise, die eine differenzierte Einstellung der Erntevorsätze und der Fahrwerke durch geänderte, voneinander abweichende Arbeitsdrücke in den hydraulischen Arbeitszylindern erfordern, um bei hoher Maschinenleistung und niedrigsten Ernteverlusten einen störungsfreien Betrieb mit hohem Bedienkomfort zu gewährleisten. So sind vom Fahrwerk bei einer Leerfahrt mit angehängtem Erntevorsatz, bei einer Leerfahrt mit anmontiertem Erntevorsatz und bei Fahrten mit einem vollen Korntank voneinander stark abweichende Achslasten aufzunehmen und auf den Fahrweg zu übertragen.

Mit der Ernte von Feldfrüchten in Hanglagen ist zwangsläufig eine Änderung des Fahrzustandes gegenüber Ernteprozessen auf annähernd ebenen Feldflächen verbunden, wobei das linke und das rechte Fahrwerk der Maschine unterschiedlich belastet wird.

Demgegenüber muß bei Arbeiten mit einem fest an die Erntemaschine angebrachten Erntevorsatz der Federweg des Fahrwerkes möglichst klein sein oder vollständig blockiert werden.

Mit den eingangs genannten, aus dem Stand der Technik bekannten Einrichtungen können die sich aus den wechselnden Betriebs- und Einsatzbedingungen von selbstfahrenden Erntemaschinen ergebenden Probleme jedoch nicht gelöst werden.

Der Erfindung liegt daher die Aufgabe zugrunde, eine Einrichtung zu entwickeln, die bei selbsttätiger Regelung der gewählten Einstellung über die elektronische Maschinensteuerung die Einstellung und Steuerung der an Arbeitsvorsätzen und Maschinenbaugruppen vorgesehenen Arbeitszylinder in Abhängigkeit von den ständig wechselnden, unterschiedlichen Belastungs- und Betriebszustände ermöglicht.

Erfindungsgemäß wird die Aufgabe durch die im Anspruch 1 aufgezeigten Merkmale gelöst. Weitere vorteilhafte Ausbildungen der Erfindung ergeben sich aus den Unteransprüchen 2 und 3.

Gemäß einem ersten Merkmal der Erfindung sind die Arbeitszylinder doppeltwirkende hydraulische Arbeitszylinder mit einseitiger Kolbenstange, deren Druckräume über Wegeventile unterschiedlich geschaltet werden können und über diese Wegeventile an die zentrale Hydraulik der Erntemaschine angeschlossen sind. Die hydraulischen Arbeitszylinder sind ferner in Parallelschaltung mit Druckspeichern direkt verbunden, denen ein Abschaltventil vorgeschaltet ist.

Mit Hilfe der Wegeventile werden die doppeltwirkenden Arbeitszylinder so umgeschaltet, daß der Kolbenflächen-Druckraum, der für die Aufnahme und Übertragung maximaler Massenkräfte ausgelegt ist und in diesem Fall die Kolbenfläche als Arbeitsfläche wirkt, während der Druckraum der Kolbenstangenfläche zum Arbeitsflüssigkeitstank hin entlüftet wird, mit dem Kolbenstangen-Druckraum verbunden ist und nur mit der Kolbenstangenfläche als wirksame Arbeitsfläche gearbeitet wird, um relativ kleinere Massenkräfte aufzunehmen und zu übertragen.

Im Betrieb der Erntemaschine wird demzufolge bei Arbeiten mit relativ niedrigen Belastungen, beispielsweise bei Leerfahrten mit abgenommenen Erntevorsatz, mit der Kolbenstangenfläche gearbeitet, während in Betriebszuständen mit höheren Belastungen, beispielsweise im Ernteprozeß mit angekoppeltem Erntevorsatz zur Einstellung des Fahrwerkes mit der Kolbenfläche der doppeltwirkenden hydraulischen Arbeitszylinder gearbeitet wird. In diesem Fall ist der Kolbenstangen-Druckraum zum Tank der Zentralhydraulik geschaltet. Das Verhältnis von Kolbenstangenfläche zu Kolbenfläche entspricht dabei in etwa der Achslast mit und ohne angekoppelten Erntevorsatz, wobei durch das Umschalten bei kleineren Belastungen auf den Kolbenstangen-Druckraum und bei großen Belastungen auf den Kolbenflächen- Druckraum der Arbeitsdruck in beiden Betriebszuständen auf einem annähernd gleichen Niveau gehalten und die Druckspeicher und Ventile auf diesen Betriebspunkt optimiert werden können.

Der Kolbenstangen-Druckraum der doppeltwirkenden hydraulischen Arbeitszylinder ist gemäß Anspruch 2 mit weiteren Druckspeichern direkt verbunden, über die beispielsweise nach Einstellung des Fahrwerkes und Abschalten des Kolbenstangen-Druckraumes von der Zentralhydraulik die Volumendifferenzen, die durch die Kolbenbewegungen infolge von Schwingungen und Stößen, die während des Betriebes vom Fahrwerk aufzunehmen sind, ausgeglichen werden. Der Druck in den Speichern simuliert dabei eine künstliche Achslast.

Mit der vorschlagsgemäßen Lösung können auch die als Stell- und Dämpfungszylinder für das Fahrwerk vorgesehenen hydraulischen Arbeitszylider einzeln eingestellt und angesteuert werden, um die durch die Hanglage bedingten Belastungen der Erntemaschine zu kompensieren. Die Neigung der Erntemaschine kann dabei in geringem Maße beeinflußt werden.

Die Stellorgane der Wege-, Umschalt- und Abschaltventile sind an die elektronische Steuerung der Erntemaschine angeschlossen, an die eingangsseitig eine Strategievorwahl für die zu erwartenden Belastungszustände und Wegaufnehmer angeschaltet ist. Die Wegaufnehmer sind beispielsweise den hydraulischen Stell- und Dämpfungszylindern des linken und rechten Fahrwerkes zugeordnet und dienen zur Überwachung der Stellung des Arbeitskolben. Durch einen Soll-/Istwertvergleich in der elektronischen Maschinensteuerung ist auf relativ einfache Weise eine Kontrolle und Regulierung der Fahrwerkeinstellung an Hand der in die Stategievorwahl eingegebenen Sollwerte möglich.

Entsprechend den vorgegebenen Werten werden die Arbeitszylinder und die Druckspeicher über die von der zentralen Maschinensteuerung angesteuerten Wegeventile mit einem Arbeitsdruck beaufschlagt, bis der von den Wegaufnehmern erfaßte Istwert mit dem vorgegebenen Sollwert übereinstimmt. Dieser Sollwert liegt etwa in der Mitte des Arbeitskolbenhubes. Danach schaltet die Steuerung die Wegeventile ab und trennt die Druckräume der hydraulischen Arbeitszylinder und die Druckspeicher von der Zentralhydraulik der Erntemaschine, wobei die Druckspeicher mit den Druckräumen der Arbeitszylinder weiterhin verbunden sind. Während der Fahrt oder während des Ernteprozesses kann der Kolben der Arbeitszylinder ein- und ausfedern, wobei die entstehenden Volumendifferenzen über die Druckspeicher ausgeglichen werden. Der in den Stell- und Dämpfungszylindern herrschende Arbeitsdruck entspricht einem Wert, der analog der jeweiligen Achslast ist.

Den Stell- und Dämpfungszylindern können vorteilhafterweise weitere Druckspeicher zugeordnet werden, die mit unterschiedlichen Drücken vorgespannt sind. Auf diese Weise ist es möglich, große Druckdifferenzen zu überbrücken, die beispielsweise zwischen Leerfahrten mit angehängtem Erntevorsatz und bei Arbeiten mit angebautem Erntevorsatz und vollem Korntank entstehen.

Die Erfindung soll nachstehend an einem Ausführungsbeispiel näher erläutert werden. In den dazugehörigen Zeichnungen zeigen:
- Fig. 1 -: den vorderen Teil eines schematisch dargestellten Mähdreschers mit einem durch Arbeitszylinder einstellbaren Erntevorsatz und vorderem Fahrwerk
- Fig. 2 -: den vorderen Teil eines selbstfahrenden Feldhäckslers, der mit einer einstellbaren Pickup oder mit einem Maiserntevorsatz ausgestattet ist
- Fig. 3 -: eine erste Ausführungsform der Erfindung zur Einstellung und Steuerung der hydraulischen Arbeitszylinder in Abhängigkeit von den Belastungszuständen der Erntemaschine
- Fig. 4 -: die erfindungsgemäße Einrichtung nach Fig. 3 unter Verwendung von doppelt wirkenden hydraulischen Arbeitszylindern mit einseitiger Kolbenstange
- Fig. 5 -: eine weitere Ausführungsvariante nach Fig. 3 und 4, bei der den Kolbenstangen-Druckräumen des hydraulischen Arbeitszylinders ein weiterer Druckspeicher zugeordnet ist

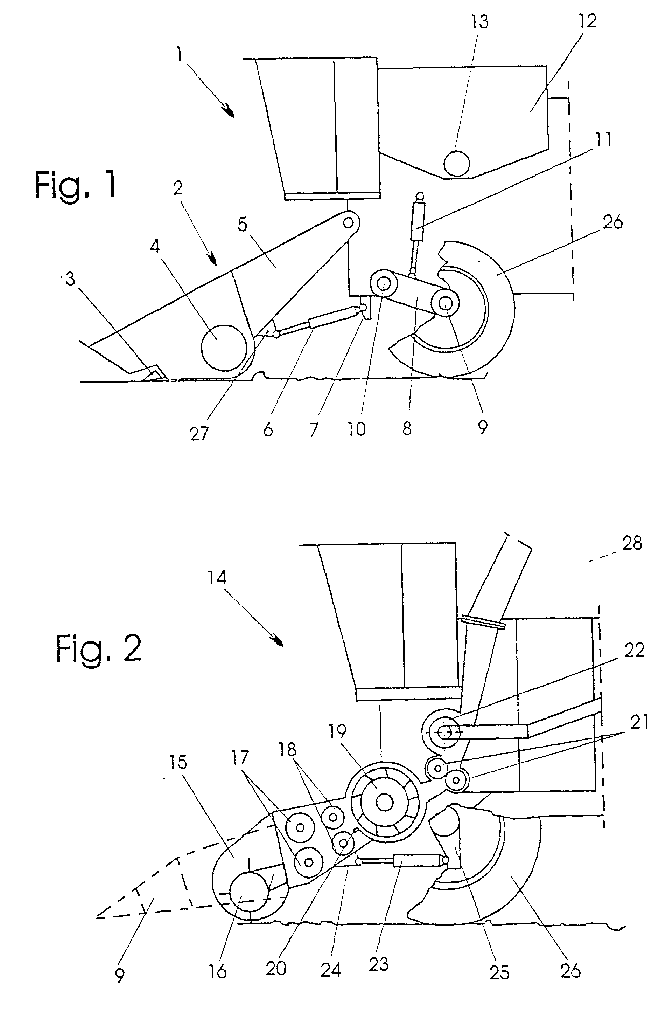

Der in Fig. 1 schematisch dargestellte vordere Teil eines Mähdreschers 1, mit Korntank 12 und Korntankentleerungsschnecke 13, besitzt ein stoßgedämpftes, abgefedertes vorderes Räderfahrwerk und einen Erntevorsatz 2, von dem lediglich das Schneidwerk 3, die Einzugsschnecke 4 mit Pickup und der Schrägförderer 5 zur Einleitung des Erntegutes in die Erntemaschine schematisch dargestellt sind. Der Erntevorsatz 2 ist auf an sich bekannte Weise unter Verwendung von hydraulischen Hubzylindern - nicht dargestellt - an den Mähdrescher 1 in den Raumachsen x, y und z verstellbar angeschlossen. Zur Einstellung und Aufrechterhaltung der Arbeitsposition, in der das Schneidwerk 3 während des Ernteprozesses mit möglichst kurzem Abstand über die Feldfläche gleitet und bei Auftreffen auf ein Hindernis angehoben wird, dient neben den hydraulischen Hubzylindern zur Ankopplung des Erntevorsatzes 2 an den Mähdrescher 1 der hydraulische Arbeitszylinder 6. Die Kolbenstange des hydraulischen Arbeitszylinders 6 ist bei 27 an den Erntevorsatz 2 angeschlagen und über einem Befestigungsblock 7 fest mit dem Maschinenrahmen des Mähdreschers 1 verbunden.

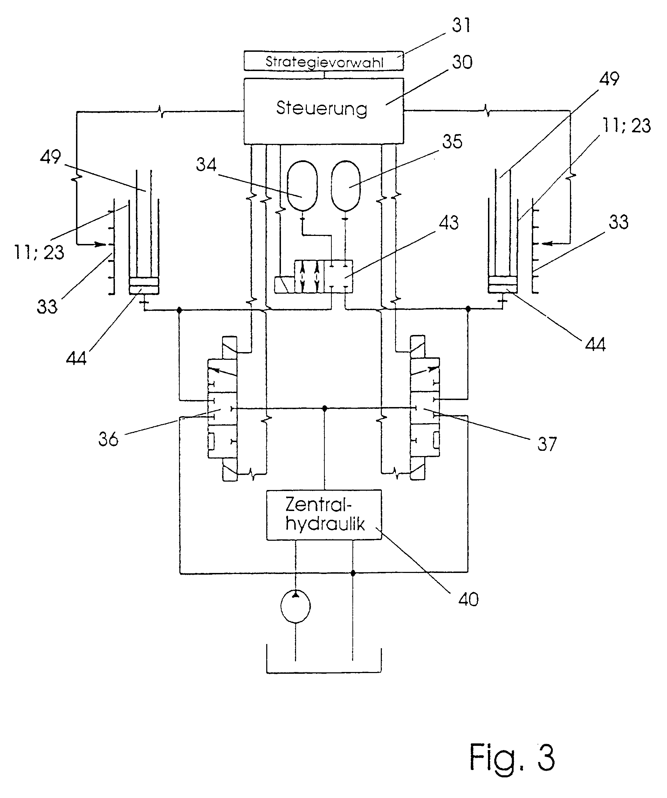

Die Radachse 9 für das vordere Laufrad 26 des Fahrwerkes ist in einer Schwinge 8 gelagert, die um den Drehpunkt 10 verschwenkbar am Maschinenrahmen angelenkt ist. Innerhalb ihres durch Endanschläge begrenzten Schwenkbereiches wird die Schwinge 8 durch einen als Stell- und Dämpfungszylinder dienenden hydraulischen Arbeitszylinder 11 abgestützt, der an der Schwinge 8 und an dem Mähdrescher angelenkt ist. In Abhängigkeit von den jeweiligen Belastungs- und Betriebszuständen der Erntemaschine wird das Fahrwerk mit Hilfe des hydraulischen Zylinders 11 voreingestellt und die während des Erntebetriebes und im Straßentransport auftretenden Schwingungen gedämpft und abgefedert. Der hydraulische Arbeitszylinder 11 ist, wie der Arbeitszylinder 6, schaltungsseitig, wie nachfolgend anhand von Fig. 3 bis 5 näher erläutert wird, in den hydraulischen Kreis der Zentralhydraulik 40 des Mähdreschers 1 eingebunden.

Der in Fig. 2 schematisch dargestellte vordere Teil eines selbstfahrenden Feldhäckslers 14 ist mit einem Erntevorsatz 15, bestehend aus einer Pickup-Trommel 16, an der sich die Einzugswalzen 17 und die Vorpreßwalzen 18 anschließen, ausgerüstet. In Abhängigkeit von dem zu erntenden Gut kann der Feldhäcksler 14 auch mit einem Erntevorsatz 9 zum Ernten von Mais ausgerüstet werden. Das von der Pickup aufgenommene Erntegut wird über die Einzug- und Vorpreßwalzen zu einer Messertrommel 19 geleitet, die das Erntegut in Zusammenwirken mit der Gegenschneide 20 zerkleinert. Das zerkleinerte Erntegut wird gegebenenfalls durch die Crackerwalzen 21 weiter aufbereitet und, unterstützt durch den Nachbeschleuniger 22, über den Austrag 28 abgeführt.

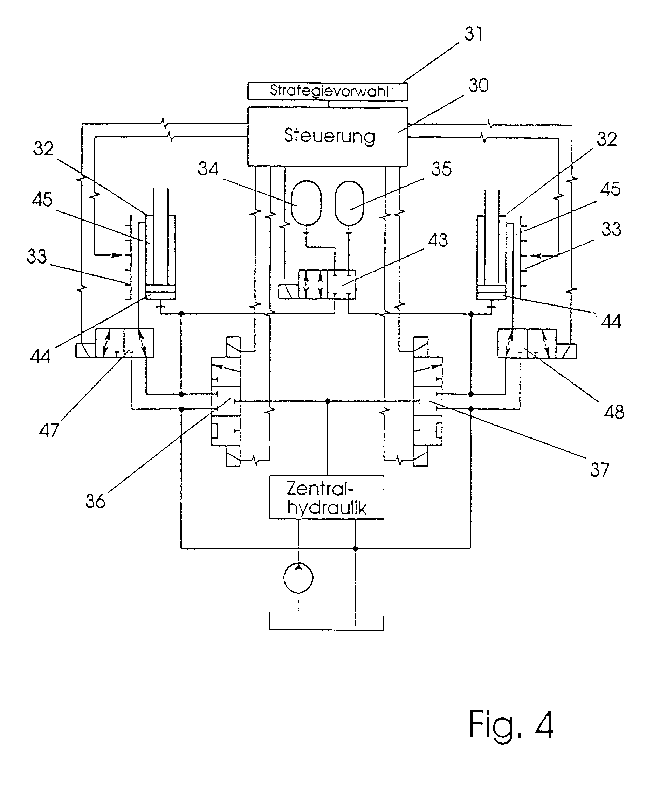

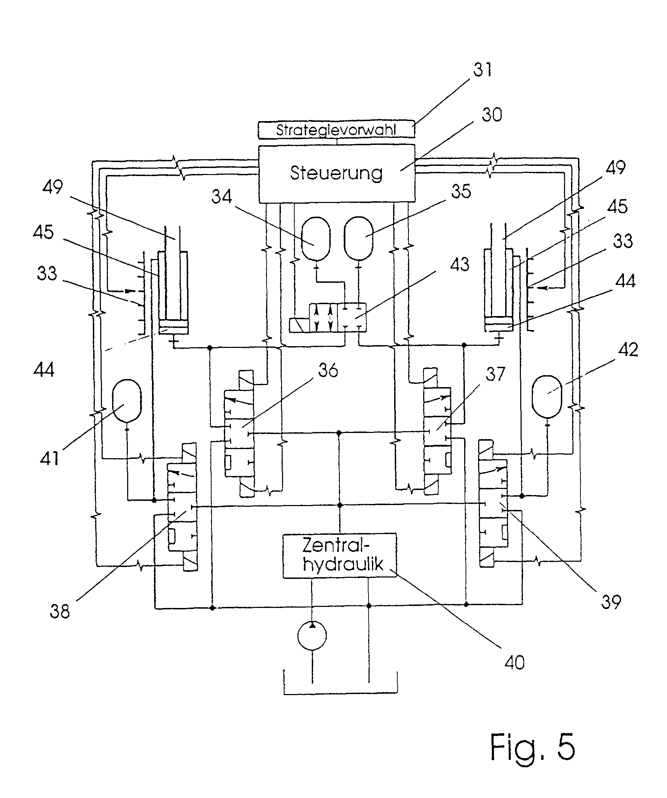

Zur Einstellung und Aufrechterhaltung der Arbeitspositionen des Erntevorsatzes 9; 15 dient ein hydraulischer Arbeitszylinder 23. Die Kolbenstange des hydraulischen Arbeitszylinders 23 ist bei 24 an den Erntevorsatz 9; 15 angeschlagen und vermittels des Befestigungsblockes 25 mit dem Maschinenrahmen des Feldhäckslers 14 fest verbunden. Wie nachstehend anhand von Fig. 4 und 5 näher beschrieben wird, ist der hydraulische Arbeitszylinder schaltungsseitig in den Kreis der Zentralhydraulik des Feldhäckslers 14 eingebunden und über die elektronische Maschinensteuerung ansteuerbar.

Der dem linken und rechten Fahrwerk zugeordnete Arbeitszylinder 11, mit dem eine Einstellung des Fahrwerkes in bezug auf die Belastungszustände und eine Anpassung des Fahrwerkes an unterschiedliche Betriebsbedingungen vorgenommen werden kann, ist gemäß einer vorteilhaften Ausführungsvariante ein einfachwirkender hydraulischer Arbeitszylinder, der über Wegeventile 36; 37 an die Zentralhydraulik 40 der Erntemaschine angeschaltet ist.

In Parallelschaltung zum Arbeitszylinder 11 sind Druckspeicher 34; 35 vorgesehen, denen ein Abschaltventil 43 vorgeschaltet ist. Die Druckspeicher 39; 40 dienen zum Ausgleich von Volumendifferenzen, die durch die Kolbenbewegungen des Arbeitskolbens 49 bei der Abfederung und Dämpfung der im Maschinen- und Fahrbetrieb auftretenden Stöße und Schwingungen hervorgerufen werden, nachdem das Fahrwerk entsprechend den zu erwartenden Belastungzuständen mit Hilfe des Arbeitszylinders 11 eingestellt und die Leitungsverbindung des Kolbenflächen-Druckraumes 44 zur Zentalhydraulik 40 durch Umschaltung der Wegeventile 36; 37 über die elektronische Steuerung 30 getrennt worden ist.

Die Stellorgane der Wegeventile 36; 37 und des Abschaltventils 43 sind steuerungsseitig mit der elektronischen Steuerung 30 der Erntemaschine verbunden, wobei an den Eingang der Steuerung 30 eine Strategievorwahl 31 für eine von der Bedienperson vornehmbare Voreinstellung des Arbeitskolbens 49 des Arbeitszylinders 11 in Abhängigkeit von den zu erwartenden Belastungszuständen und der Stellung des Wegaufnehmers 33 angeschaltet ist. Die Wegaufnehmer 33 sind den Arbeitszylindern 11 zugeordnet und erfassen die Kolbenstellung des Arbeitskolbens 49. Abweichungen vom eingestellten Sollwert, der in etwa der Mittelstellung des Arbeitskolbens 49 entspricht, werden der elektronischen Steuerung 30 signalisiert und lösen eine Betätigung der Stellorgane der Wegeventile 41; 42 aus, um durch Veränderung des Arbeitsdruckes im Kolbenflächen-Druckraum 44 den Arbeitskolben 49 ein- oder auszufahren. Der Arbeitsdruck entspricht dabei einem Wert, der analog der Achslast ist.

Bei Hanglagen kann in kleinen Grenzen die Neigung der Maschine korrigiert werden, indem das linke und rechte Fahrwerk vermittels des Arbeitszylinders 11 unterschiedlich hoch eingestellt wird.

Bei einer Eingabe "Federung und unbeladene Maschine" betätigt die Steuerung 30 die Wegeventile 36; 37 und das Abschaltventil 43 und verbindet den Kolbenflächen-Druckraum 44 des Arbeitszylinders 11 und die Druckspeicher 34; 35 mit der Zentralhydraulik 40 der Erntemaschine. Die Arbeitskolben 49 werden soweit ausgefahren, bis die Wegaufnehmer 33 eine Kolbenstellung signalisieren, die dem an der Strategievorwahl 31 eingestellten Sollwert entspricht. Dieser liegt, wie vorstehend ausgeführt, etwa in der Hälfte des Hubes des Arbeitskolbens 49. Danach schaltet die Steuerung 30 die Wegeventile 36; 37 und das Abschaltventil 43 von der Leitungsverbindung zur Zentralhydraulik 40 ab. Während des nachfolgenden Arbeitsbetriebes der Erntemaschine kann der Arbeitskolben 49 des Arbeitszylinders 11 ein- und ausfedern, wobei die dadurch ausgelösten Volumendifferenzen im Kolbenflächen-Druckraum 44 über die Druckspeicher 39; 40 ausgeglichen werden.

Wird der Erntevorsatz 2 angebaut und angehoben, so steigt die Achslast und damit der Druck im Kolbenflächen-Druckraum 44. Der Arbeitskolben 49 fährt ein und verdrängt die Arbeitsflüssigkeit in die Druckspeicher 34; 35. Die Steuerung 30 erfaßt über die Wegaufnehmer 33 die Abweichungen vom Sollwert und schaltet die Wegeventile 36; 37, wodurch die Druckräume 44 mit der Zentralhydraulik 40 verbunden werden. Die Druckräume 44 werden erneut mit dem Druck der Arbeitsflüssigkeit beaufschlagt und der Arbeitskolben 49 soweit ausgefahren, bis die Wegaufnehmer 33 die Stellung des Arbeitskolbens 49, die dem vorgegebenen Sollwert entspricht, signalisieren. Danach werden die Wegeventile 36; 37 durch die Steuerung 30 wiederum abgeschaltet und die Druckräume 44 der Arbeitszylinder 11 mit den Druckspeichern 39; 40 direkt verbunden, um die während des Betriebes auftretenden Schwingungen und Stöße abzufangen und zu dämpfen. Der gleiche Vorgang tritt ein, wenn sich während des Arbeitsprozesses der Korntank 12 allmählich füllt und die Achslast ständig erhöht.

Mit der Entleerung des Korntanks 12 verringert sich das Maschinengewicht, der Druck in den Druckräumen 44 fällt und der Arbeitskolben 49 fährt aus, wobei das fehlende Volumen an Arbeitsflüssigkeit durch die Druckspeicher 34; 35 nachgefüllt wird. Die Abweichung des Arbeitskolbens 49 von seiner Sollstellung wird wiederum durch die Wegaufnehmer 33 erfaßt und an die Steuerung 30 signalisiert. Die Steuerung schaltet die Wegeventile 36; 37 so, daß sich der Druck der Arbeitsflüssigkeit in den Druckräumen 44 der Arbeitszylinder 11 reduziert und der Arbeitskolben 49 soweit einfährt bis die Wegaufnehmer 33 eine Kolbenstellung signalisieren, die dem gewünschten Sollwert entspricht.

Dieser Vorgang wiedernolt sich, wenn beispielsweise der Erntevorsatz 2 abgebaut wird und sich die Achslast der Erntemaschine weiter verringert.

Gemäß einer vorteilhaften Ausführung sind die Arbeitszylinder 6; 11 und 23 doppeltwirkende hydraulische Arbeitszylinder. Diese Ausführungsform hat den Vorteil, daß bei niedrigen Lastkräften mit dem Kolbenstangen-Druckraum 45 und bei höheren Lastkräften, die einen höheren Arbeitsdruck erfordern, mit dem Kolbenflächen-Druckraum 44 der doppeltwirkenden Arbeitszylinder gearbeitet werden kann. Das Verhältnis von Kolbenstangenfläche und Kolbenfläche entspricht dabei den Belastungszuständen der Erntemaschine mit und ohne Erntevorsatz 2; 9 und 15. Bei hohen Belastungszuständen wird dann mit der Kolbenfläche und während des Maschinenbetriebes ohne angebauten Erntevorsatz mit der Kolbenstangenfläche gearbeitet. Der schaltungsseitige Aufbau ist in Fig. 4 dargestellt.

Nach Fig. 4 sind die Druckräume 45 der Kolbenstangenfläche über ansteuerbare Umschaltventile 47; 48 wahlweise mit dem Druckraum 44 der Kolbenfläche, den Druckspeichern 34 und 35 und/oder der Tankleitung der Zentralhydraulik 40 verbunden und über das Wegeventil 36; 37 an die Zentralhydraulik 40 der Erntemaschine angeschlossen.

Eine weitere Schaltungsvariante ist in Fig. 5 dargestellt. Wie aus dieser Figur ersichtlich, sind weitere Druckspeicher 41; 42 direkt an die Druckräume 45 der Kolbenstangenfläche angeschaltet und über ansteuerbare Wegeventile 38; 39 mit der Zentralhydraulik 40 und durch die Wegeventile 36; 37 mit den Druckräumen 44 der Kolbenfläche verbunden. Dabei wird durch Vorspannen der Speicher 41; 42 zunächst von einer Erhöhung der Belastungszustände ausgegangen und danach der Druck in den Speichern 41; 42 entsprechend der tatsächlich eingetretenen Belastung eingestellt.

Auf diese Weise können die Speicher an unterschiedliche Belastungszustände, die unterschiedliche Speicherdrücke erfordern, angepaßt und die Kolben 49 der Arbeitszylinder 6; 11 und 23 in der lastaufnehmenden Mittelstellung eingestellt und in dieser Mittelstellung gehalten werden.

Bei Betriebszuständen, in denen ohne Einfederung des Arbeitskolbens 49 gearbeitet werden muß, beispielsweise bei Arbeiten mit festem Erntevorsatz, werden die Druckspeicher 34; 35 durch das Abschaltventil 43 abgeschaltet. Die Einstellung des Fahrwerkes und der Erntevorsätze 2; 9 und 15 erfolgt, wie vorstehend beschrieben, durch Veränderungen der Stellung des Arbeitskolbens 49 der Arbeitszylinder 6; 11 und 23 und wird von der elektronischen Steuerung 30 über den in die Strategievorwahl 31 eingegebenen Sollwert gesteuert.

Die automatische Regelung der Fahrwerkeinstellung auf der Grundlage der Achslasten und der Betriebzustände kann auch vollständig abgeschaltet werden, um von Hand eine Einstellung vorzunehmen. Diese Einstellmöglichkeit ist insbesondere dann von Vorteil, wenn bei Arbeiten in Hanglagen das linke und das rechte Fahrwerk gesondert einzustellen ist.

### Bezugszeichenaufstellung

- 1: Mähdrescher
- 2: Erntevorsatz
- 3: Schneidwerk
- 4: Einzugsschnecke
- 5: Schrägförderer
- 6: hydraulischer Arbeitszylinder
- 7: Befestigungsblock
- 8: Schwinge
- 9: Radachse
- 10: Drehpunkt
- 11: hydraulischer Arbeitszylinder
- 12: Korntank
- 13: Korntankentleerungsschnecke
- 14: Feldhäcksler
- 15: Erntevorsatz
- 16: Pickup-Trommel
- 17: Einzugswalzen
- 18: Vorpreßwalzen
- 19: Messertrommel
- 20: Gegenschneide
- 21: Cracker-Walzen
- 22: Nachbeschleuniger
- 23: Arbeitszylinder
- 24: Anschlag
- 25: Befestigungsblock
- 26: vorderes Laufrad
- 27: Anschlag
- 28: Austrag

- 30: Steuerung
- 31: Strategievorwahl
- 32: Arbeitszylinder
- 33: Wegaufnehmer
- 34: Druckspeicher
- 35: Druckspeicher
- 36: Wegeventil
- 37: Wegeventil
- 38: Wegeventil
- 39: Wegeventil
- 40: Zentralhydraulik
- 41: Druckspeicher
- 42: Druckspeicher
- 43: Abschaltventil
- 44: Druckraum-Kolbenfläche
- 45: Druckraum-Kolbenstangenfläche
- 46: -
- 47: Umschaltventil
- 48: Umschaltventil
- 49: Kolbenstange

## Patentansprüche

1. Einrichtung zur Einstellung und Steuerung hydraulischer Arbeitszylinder (6; 11; 23) von Arbeitsvorsätzen (2) und Baugruppen an Arbeitsmaschinen (1), vorzugsweise selbstfahrenden Erntemaschinen, deren Kolbenflächen-Druckräume (44) über Wegeventile (36, 37) an einen zentralen Hydraulikkreis (40) der Arbeitsmaschine angeschlossen und in Parallelschaltung mit einem aufladbaren Druckspeicher (34; 35) mit vorgeschaltetem Abschaltventil (43) verbunden sind, wobei die Wege- und Abschaltventile über eine Steuerschaltung (30), die mit einer Sollwertvorgabe verbunden ist, ansteuerbar sind und Mittel vorgesehen sind, die bei Auftreten von Druckänderungen, die eine Überlastung oder Unterschreitung vorgegebener Arbeitsdruck-Sollwerte darstellen, selbsttätig eine Leitungsverbindung zur Druck- oder Rücklaufleitung des Hydraulikkreises herstellen, **dadurch gekennzeichnet, daß** die Arbeitszylinder (6; 11; 23) doppeltwirkende Arbeitszylinder (32) mit einseitiger Kolbenstange (49) sind, deren Kolbenstangen-Druckraum (45) über Umschaltventile (47; 48) wahlweise mit dem Kolbenflächen-Druckraum (44), mit den Druckspeichern (34; 35) oder mit der Tankleitung (45) der Zentralhydraulik (40) verbunden und über Wegeventile (36; 37) an die Zentralhydraulik (40) angeschaltet und dem Arbeitszylinder (11) ein, an die elektronische Steuerung (30) der Erntemaschine (1; 14) angeschlossener Wegaufnehmer (38), zur Überwachung und Erfassung der Stellung des Arbeitskolbens (49) zugeordnet ist.

2. Einrichtung nach Anspruch 1, **dadurch gekennzeichnet, daß** der Kolbenstangen-Druckraum (45) der Arbeitszylinder (6, 11; 23) in Parallelschaltung mit weiteren Druckspeichern (41; 42) direkt verbunden und über zwischengeschaltete Wegeventile (38; 39) an die Zentralhydraulik (45) der Erntemaschine (1; 14) und über Wegeventile (36; 37) an den Kolbenflächen-Druckraum (44) und an die Druckspeicher (34; 35) angeschaltet ist.

3. Einrichtung nach Anspruch 1 und 2, **dadurch gekennzeichnet, daß** die Stellorgane der Wegeventile (36; 37; 38; 39), des Abschaltventils (43) und der Umschaltventile (47; 48) steuerungsseitig mit der elektronischen Steuerung (30) der Erntemaschine (1; 14) verbunden sind und an den Eingang der Steuerung (30) eine Vorwahl (31) zur Einstellung eines Arbeitsdruck-Sollwertes in den Druckräumen (44; 45) der Arbeiszylinder (6; 11; 23) angeschlossen ist.

## Claims

1. Apparatus for adjusting and controlling hydraulic working cylinders (6; 11; 23) of front-mounted working attachments (2) and structural units on working machines (1), preferably self-propelled harvesters, whose piston surface pressure chambers (44) are connected by way of directional control valves (36, 37) to a central hydraulic circuit (40) of the working machine and which are connected in parallel relationship to a chargeable pressure storage means (34; 35) with an upstream-connected shut-off valve (43), wherein the directional control and shut-off valves are actuatable by way of a control circuit (40) which is connected to a reference value presetting means, and there are provided means which upon the occurrence of changes in pressure which represent an overload or represent working pressure values falling below predetermined reference values, automatically make a line connection to the pressure or return line of the hydraulic circuit, **characterised in that** the working cylinders (6; 11; 23) are double-acting working cylinders (32) with a piston rod (49) at one side, whose piston rod pressure chamber (45) is connected by way of change-over switching valves (47; 48) selectively to the piston surface pressure chamber (44), to the pressure storage means (34; 35) or to the tank line (45) of the central hydraulics (40) and is switched by way of directional control valves (36; 37) to the central hydraulics (40) and associated with the working cylinder (11) is a travel detector (38) connected to the electronic control (30) of the harvester (1; 14), for monitoring and detecting the position of the working piston (49).

2. Apparatus according to claim 1 **characterised in that** the piston rod pressure chamber (45) of the working cylinders (6, 11; 23) is directly connected in parallel relationship to further pressure storage means (41; 42) and is switched by way of interposed directional control valves (38; 39) to the central hydraulics (40) of the harvester (1; 14) and by way of directional control valves (36; 37) to the piston surface pressure chamber (44) and the pressure storage means (34; 35).

3. Apparatus according to claim 1 and claim 2 **characterised in that** the control members of the directional control valves (36; 37; 38; 39), the shut-off valve (43) and the change-over switching valves (47; 48) are connected on the control side to the electronic control (30) of the harvester (1; 14) and connected to the input of the control (30) is a preselection means (31) for setting a working pressure reference value in the pressure chambers (44; 45) of the working cylinders (6; 11; 23).

## Revendications

1. Dispositif pour le réglage et la commande de cylindres de travail ou vérins (6; 11; 23) hydrauliques d'outils frontaux (2) et de groupes fonctionnels sur des machines de travail (1), de préférence des moissonneuses automotrices, vérins dont les chambres de pression (44) côté fond sont raccordées par des valves de distribution (36, 37) à un circuit hydraulique central (40) de la machine de travail et sont en montage en parallèle reliées à un accumulateur de pression (34;35) précédé d'une valve de disjonction (43), les valves de distribution et de disjonction étant pilotées en passant par un circuit de commande (30) relié à un système de définition de valeurs de consigne et des moyens étant prévus pour, lors de l'apparition de variations de pression qui font passer la pression de travail au-dessus ou au-dessous de valeurs de consigne définies, établir automatiquement une communication avec le côté pression ou le côté retour du circuit hydraulique, **caractérisé par le fait que** les vérins (6; 11; 23) sont des vérins (32) à double effet à tige de piston (49) simple, dont la chambre de pression (45) côté tige est reliée par des valves de commutation (47; 48) sélectivement à la chambre de pression (44) côté fond, aux accumulateurs de pression (34; 35) ou à la conduite (45) de retour au réservoir de la centrale hydraulique (40) et est connectée par des valves de distribution (36; 37) à la centrale hydraulique (40) et qu'au vérin (11) est associé un capteur de déplacement (38) raccordé à la commande électronique (30) de la moissonneuse (1; 14), pour la surveillance et la détection de la position du piston (49).

2. Dispositif suivant revendication 1, **caractérisé par le fait que** la chambre de pression (45) côté tige des vérins (6, 11; 23) en montage en parallèle est reliée directement à des accumulateurs de pression (41; 42) supplémentaires et est connectée par des valves de distribution (38; 39) intermédiaires au circuit hydraulique central (45) de la moissonneuse (1; 14) et par des valves de distribution (36; 37) à la chambre de pression (44) côté fond et aux accumulateurs de pression (34; 35).

3. Dispositif suivant revendication 1 et 2, **caractérisé par le fait que** les organes de commande des valves de distribution (36; 37; 38; 39), de la valve de disjonction (43) et des valves de commutation (47; 48) sont reliés côté commande à la commande électronique de la moissonneuse (1; 14) et qu'un système de présélection (31) pour l'établissement d'une valeur de consigne de pression de travail dans les chambres de pression (44; 45) des vérins (6; 11; 23) est raccordé à l'entrée de la commande (30).
